# EUROPÄISCHE PATENTANMELDUNG

(11) **EP 1 429 358 A1**
(43) Veröffentlichungstag der Anmeldung: **16.06.2004**
(21) Anmeldenummer: 03026294.3
(22) Anmeldetag: 15.11.2003
(51) Int. Cl.: H01H 25/04

(54) **Lenkstockschalter für ein Fahrzeug**

(30) Priorität: 10.12.2002 DE 10257542
(71) Anmelder: Valeo Schalter und Sensoren GmbH, 74321 Bietigheim-Bissingen (DE)
(72) Erfinder: Mozer, Reiner, 71665 Vaihingen/Enz (DE)
(74) Vertreter: Dreiss, Fuhlendorf, Steimle & Becker

(57) **Zusammenfassung**

Die Erfindung betrifft insbesondere einen Lenkstockschalter (100) mit einem Griff, der eine Mehrzahl von Sensorelementen (120) zum individuellen Anfordern von vorbestimmten Funktionen umfasst. Weiterhin umfasst der Lenkstockschalter einen rohrförmigen Hebel (130) mit darin als Übertragungseinrichtung geführten elektrischen Leitungen zum Übertragen der angeforderten Funktionen an eine elektronische Schaltung (140), die die Auslösung dieser Funktionen veranlasst. Als Funktionen wird insbesondere ein Betrieb der akustischen Hupe, der Lichthupe oder des Blinkers angefordert. Um verschiedene alternative Übertragungsverfahren für die angeforderten Funktionen an die elektronische Schaltung (140) zu realisieren, wird vorgeschlagen, den angeforderten Funktionen jeweils eine Kennung zuzuordnen, die Funktionen in Form dieser individuellen Kennungen zu übertragen und in der elektronischen Schaltung eine Erkennungseinrichtung (112) vorzusehen, um die Erkennung anhand der übertragenen und empfangenen Kennungen zu identifizieren.

## Beschreibung

Die Erfindung betrifft einen Lenkstockschalter für ein Fahrzeug, insbesondere ein Kraftfahrzeug, ein Verfahren zum Betreiben des Lenkstockschalters und ein Computerprogramm für einen Mikrocontroller zum Durchführen dieses Verfahrens.

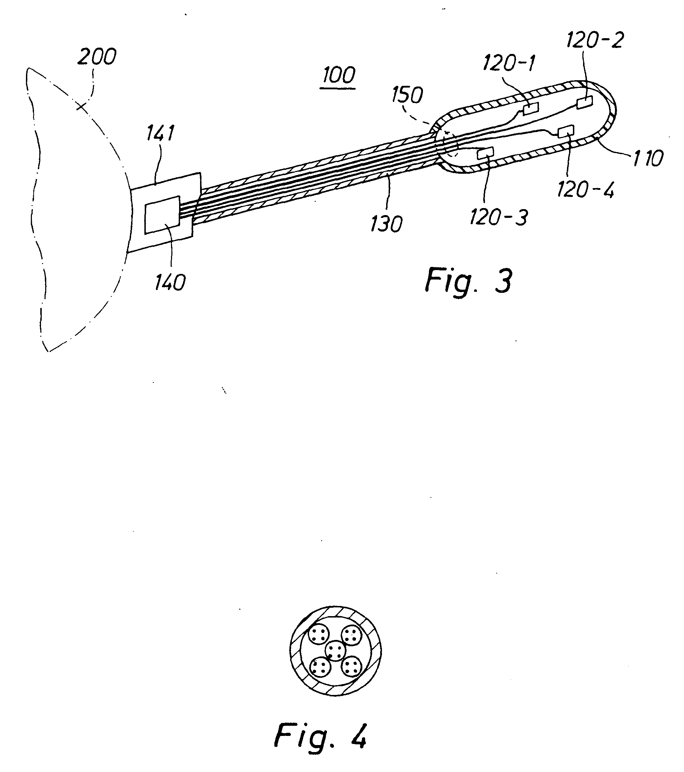

Lenkstockschalter sind im Stand der Technik grundsätzlich bekannt. Ein Beispiel ist in Figur 3 dargestellt und wird nachfolgend näher erläutert:

Der traditionelle, in Figur 3 gezeigte Lenkstockschalter 100 umfasst einen Griff 110 mit einer Mehrzahl von Sensorelementen 120-1, 120-2, 120-3 und 120-4 zum individuellen Anfordern von vorbestimmten Funktionen, vorzugsweise durch den Fahrer des Fahrzeugs. Bei diesen Funktionen handelt es sich beispielsweise um die Betätigung der Hupe, der Lichthupe, der Wischer, der Waschanlage für die Windschutzscheibe oder der Blinker. Der Griff 110 ist über einen Hebel 130 und einen Schaltergrundkörper 141, in dem der Hebel vorzugsweise beweglich gelagert ist, mit der Lenksäule 200 des Fahrzeugs verbunden. Die einzelnen Sensorelemente 120 sind typischerweise als Schaltelemente ausgebildet. Jedes dieser Sensorelemente 120 ist über eine separate Leitung mit einer elektronischen Schaltung in dem Schaltergrundkörper 141 verbunden. Die separaten elektrischen Leitungen der Sensorelemente bilden zusammen eine Übertragungseinrichtung 150 und dienen zum Übertragen der mit Hilfe der Sensorelemente angeforderten Funktionen an die elektronische Schaltung 140. Die Übertragungseinrichtung beziehungsweise das Bündel der elektrischen Leitungen wird typischerweise durch den rohrförmig ausgebildeten Hebel 130 zu der elektronischen Schaltung 140 geführt.

Figur 4 zeigt den Querschnitt des rohrförmig ausgebildeten Hebels, in dem die Vielzahl der elektronischen Leitungen geführt ist. Die Anzahl der elektronischen Leitungen entspricht dabei der Anzahl der Sensorelemente 120 in dem Griff 110 zuzüglich eines Masseleiters.

Ausgehend von diesem Stand der Technik ist es die Aufgabe der Erfindung, einen bekannten Lenkstockschalter, ein Verfahren zu seinem Betrieb sowie ein Computerprogramm für einen Mikrocontroller in der elektronischen Schaltung des Lenkstockschalters derart weiterzubilden, dass auch andere Übertragungsverfahren, insbesondere solche, die weniger elektronische Leitungen benötigen, für das Übermitteln der angeforderten Funktionen an die elektronische Schaltung verwendet werden können.

Diese Aufgabe wird durch den Gegenstand des Patentanspruchs 1 im Hinblick auf den Lenkstockschalter gelöst. Demnach besteht die Lösung insbesondere darin, dass bei dem Lenkstockschalter eine Kennzeichnungseinrichtung vorgesehen ist zum Kennzeichnen der den einzelnen Sensorelementen zugeordneten Funktionen in Form einer jeweils individuellen Kennung, dass die Übertragungseinrichtung ausgebildet ist, die angeforderten Funktionen in Form ihrer individuellen Kennungen zu übertragen und dass die elektronische Schaltung eine Erkennungseinrichtung aufweist zum Erkennen der angeforderten Funktionen anhand der übertragenen und empfangenen Kennungen.

Die erfindungsgemäß vorgeschlagene Ausbildung des Lenkstockschalters, bei der jeder Funktion eine separate Kennung zugeordnet wird und nicht mehr die Funktion selber, sondern lediglich nur noch deren Kennung übertragen wird, ermöglicht vorteilhafterweise auch die Verwendung anderer als der bisher üblichen Übertragungsverfahren zur Übertragung der angeforderten Funktionen an die elektronische Schaltung.

Gemäß einem ersten Ausführungsbeispiel der Erfindung ist die Übertragungseinrichtung vorzugsweise zusammen mit der Kennzeichnungs- und Erkennungseinrichtung als Bussystem ausgebildet. Vorteilhafterweise wird dabei jedem Sensorelement beziehungsweise jeder dem Sensorelement zugeordneten Funktion eine eigene Adresse zugeordnet, welche als Kennung an die elektronische Schaltung übertragen wird.

Gemäß einem zweiten Ausführungsbeispiel ist die Kennzeichnungseinrichtung als Modulationseinrichtung ausgebildet zum Erzeugen eines Übertragungssignals durch Aufmodulieren eines Funktionssignals, welches die jeweils angeforderte Funktion und deren Kennung repräsentiert, auf ein Trägersignal. Weiterhin ist bei diesem zweiten Ausführungsbeispiel die Erkennungseinrichtung als Demodulationseinrichtung ausgebildet zum Erkennen der jeweils angeforderten Funktionen durch Demodulieren des Übertragungssignals nach dessen Übertragung an die elektronische Schaltung.

Allen genannten Ausführungsbeispielen der Erfindung ist gemeinsam, dass aufgrund der erfindungsgemäßen Zuordnung einer Kennung zu den jeweils angeforderten Funktionen lediglich nur noch eine zweiadrige Leitung als Übertragungseinrichtung erforderlich ist. Über diese zweiadrige Leitung, bestehend aus einer Masseleitung und einer gemeinsamen Versorgungs- und Signalleitung, können die unterschiedlichen angeforderten Funktionen in Form ihrer Kennung übertragen werden. Im Unterschied zum Stand der Technik ist es nicht mehr erforderlich, dass jede der angeforderten Funktionen mit Hilfe einer eigenen Signalleitung an die elektronische Schaltung übertragen wird. Die aufgrund der vorliegenden Erfindung mögliche Reduzierung der Übertragungseinrichtung auf eine nur noch zweiadrige Leitung, die vorzugsweise in dem rohrförmig ausgebildeten Hebel des Lenkstockschalters geführt wird, bietet den Vorteil, dass die Wandstärke dieses Hebels vergrößert werden kann, ohne dass dessen Außendurchmesser vergrößert werden muss. Auf diese Weise kann vorteilhafterweise bei gleichem Außendurchmesser eine erhöhte Stabilität des Hebels realisiert werden.

Auch außerhalb des Griffes und des Hebels können weitere Sensorelemente zum Anfordern weiterer Funktionen, insbesondere der Blinkfunktion, angeordnet sein. Auch diesen Sensorelementen ist vorzugsweise eine Kennzeichnungseinrichtung zugeordnet, welche den mit diesen Sensorelementen verbundenen Funktionen eine Kennung zuweist, die ebenfalls über die erfindungsgemäße Übertragungseinrichtung übertragen und von der erfindungsgemäßen Erkennungseinrichtung erkannt werden kann.

Es ist von Vorteil, wenn die Sensorelemente zumindest teilweise als Hall-Elemente ausgebildet sind und eventuell sogar zusammen mit ihr zugeordneten Kennzeichnungseinrichtungen in einem integrierten Schaltkreis integriert sind.

Zum Auswerten der empfangenen Kennungen und zum Auslösen der angeforderten Funktionen durch Aktivieren von zum Beispiel der Hupe, der Wischanlage, der Wischer oder der Lichthupe ist es vorteilhaft, wenn die elektronische Schaltung einen Mikrocontroller aufweist.

Die oben beschriebene Aufgabe wird weiterhin durch ein Verfahren zum Betreiben eines Lenkstockschalters für ein Fahrzeug und durch ein Computerprogramm für den Mikrocontroller in der elektronischen Schaltung des Lenkstockschalters gelöst. Die Vorteile des Verfahrens und das Computerprogramms entsprechen den oben für den erfindungsgemäßen Lenkstockschalter aufgezeigten Vorteilen.

Weitere vorteilhafte Ausgestaltungen der aufgezeigten Lösungen der Aufgabe sind Gegenstand der Unteransprüche.

Der Beschreibung sind insgesamt vier Figuren beigefügt, wobei
- Figur 1: ein erstes Ausführungsbeispiel der Erfindung,
- Figuren 2a und 2b: Ausgestaltungen der erfindungsgemäßen Übertragungseinrichtung integriert in den Hebel des Lenkstockschalters;
- Figur 3: einen Lenkstockhebel gemäß dem Stand der Technik und
- Figur 4: eine Übertragungseinrichtung gemäß dem Stand der Technik integriert in einen Hebel des Lenkstockschalters
zeigt.

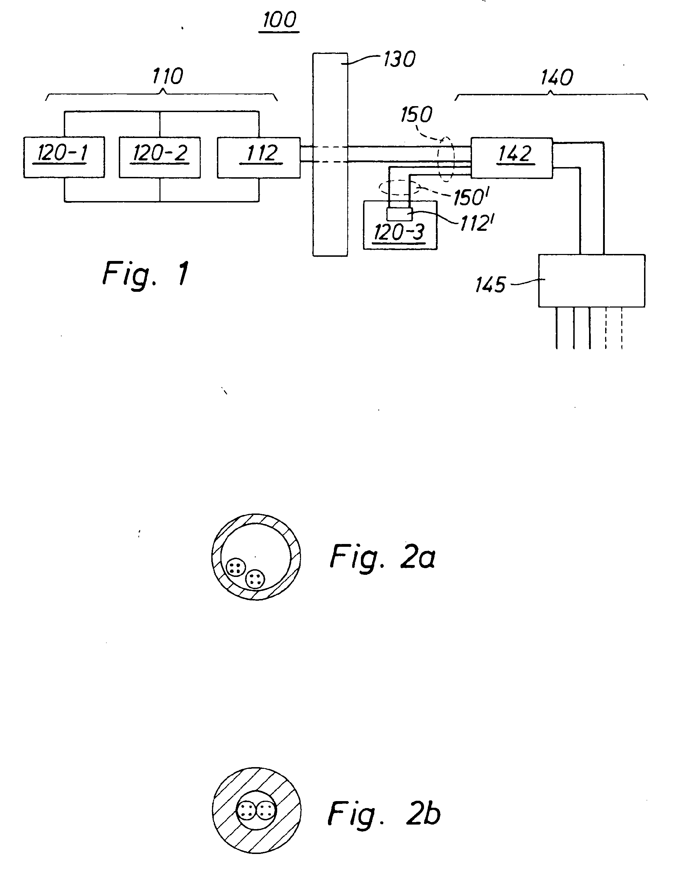

Die Erfindung wird nachfolgend detailliert anhand von Ausführungsbeispielen unter Bezugnahme auf die Figuren 1 und 2 näher beschrieben.

Figur 1 zeigt einen erfindungsgemäßen Lenkstockschalter in stark schematisierter Form. Die mechanischen Bauelemente des Lenkstockschalters wie insbesondere der Griff 110 und der Hebel 130 entsprechen den bereits oben unter Bezugnahme auf Figur 3 beschriebenen Komponenten und werden mit den gleichen Bezugszeichen bezeichnet.

Der wesentliche Unterschied zu dem in Figur 3 gezeigten traditionellen Lenkstockschalter besteht darin, dass die Übertragungseinrichtung nicht mehr als elektronisches Leitungsbündel, umfassend eine elektrische Leitung für jedes Sensorelement in dem Griff 110 zuzüglich eines Massenleiters oder Versorgungsleiters besteht. Stattdessen umfasst der erfindungsgemäße Lenkstockschalter vorzugsweise in dem Griff 110 angeordnet, eine Kennzeichnungseinrichtung 112 zum Kennzeichnen der den einzelnen Sensorelementen zugeordneten Funktionen in Form einer jeweils individuellen Kennung. Gleichzeitig umfasst die elektronische Schaltung 140 eine Erkennungseinrichtung 142 zum Erkennen der gegebenenfalls insbesondere von dem Fahrer des Fahrzeugs über die Sensorelemente 120-1, 120-2 und 120-3 angeforderten Funktionen anhand ihrer Kennungen nach deren Übertragung. Aufgrund der erfindungsgemäßen Zuordnung von Kennungen zu den einzelnen anforderbaren Funktionen ist es nicht mehr erforderlich, dass jede dieser Funktionen mit einer separaten elektrischen Leitung an die elektronische Schaltung 140 geführt wird, sondern stattdessen ist es ausreichend, wenn eine Übertragungseinrichtung vorgesehen wird, die die angeforderten Funktionen in Form ihrer individuellen Kennungen übertragen kann.

Gemäß einem ersten Ausführungsbeispiel der Erfindung ist deshalb die Übertragungseinrichtung vorzugsweise zusammen mit der Kennzeichnungs- und der Erkennungseinrichtung als Bussystem ausgebildet. Die Sensorelemente 120-1, 120-2 und 120-3 sowie die ihnen jeweils zugeordneten Funktionen werden in dem Bussystem jeweils durch eine Adresse repräsentiert, die wiederum als Kennung für die entsprechende Funktion dient. Als Funktionen werden insbesondere die oben bereits unter Bezugnahme auf Figur 3 beschriebenen Funktionen angefordert, nämlich zum Beispiel das Einschalten und Ausschalten der Wischanlage für die Windschutzscheibe oder das Einschalten der akustischen oder der Lichthupe.

Bei einer Realisierung des Bussystems werden die angeforderten Funktionen, wie beschrieben, in Form von Adresskennungen über die Übertragungseinrichtung an die elektronische Schaltung übertragen. Dort bewirkt dann eine Erkennungseinrichtung 142 eine Erkennung der in Form der Adresse codierten angeforderten Funktion.

Alternativ zur Verwendung eines Bussystems besteht ebenfalls die Möglichkeit, die gewünschten angeforderten Funktionen in modulierter Form an die elektronische Schaltung 140 zu übertragen. Die Kennzeichnungseinrichtung 142 ist dann als Modulationseinrichtung ausgebildet zum Erzeugen eines Übertragungssignals durch Aufmodulieren eines Funktionssignals, welches die jeweils angeforderte Funktion und deren Kennung repräsentiert, auf ein Trägersignal. Das Übertragungssignal wird dann von der als Demodulationseinrichtung ausgebildeten Erkennungseinrichtung demoduliert, um darin die gewünschte angeforderte Funktion zu erkennen.

Sowohl bei einer Übertragung der angeforderten Funktionen über ein Bussystem wie auch bei einer Übertragung in modulierter Form ist es nicht mehr erforderlich, für jede der angeforderten Funktionen eine separate elektrische Leitung vorzusehen. Vielmehr ist es aufgrund der erfindungsgemäßen Kennzeichnung der angeforderten Funktionen mit individuellen Kennungen möglich, die Übertragungseinrichtungen für beide Ausführungsbeispiele zumindest für über den Griff 110 anzufordernde Funktionen lediglich in Form einer zweiadrigen elektrischen Leitung auszuführen. Diese zweiadrige Leitung wird vorzugsweise in dem rohrförmig ausgebildeten Hebel 130 geführt. Bei Verwendung der zweiadrigen Leitung ist eine dieser Leitungen als Masseleitung und die andere als Signalleitung ausgebildet. Die eine Signalleitung ist ausreichend nicht nur für eine sequentielle, sondern auch für eine zeitgleiche Übertragung aller angeforderten Funktionen in Form ihrer jeweiligen Kennungen. Eine zeitgleiche Übertragung wäre zum Beispiel mit Hilfe eines Frequenzmodulationsverfahrens möglich.

Die Figuren 2a und 2b zeigen den Hebels des Lenkstockschalters mit der darin geführten zweiadrigen Leitung. Weil erfindungsgemäß für eine Übertragung von angeforderten Funktionen über den Hebel nur noch eine zweiadrige Leitung erforderlich ist, besteht die Möglichkeit, die Wandstärke des Hebels und damit dessen mechanische Festigkeit deutlich zu vergrößern, ohne dass dessen Außendurchmesser ebenfalls vergrößert werden muss, siehe Figur 2b.

Wie in Figur 1 zu erkennen ist, müssen die Sensorelemente nicht zwangsläufig alle in den Griff 110 des Lenkstockschalters 100 integriert sein, sondern vielmehr können sie auch zumindest teilweise auf der lenkstockseitigen Seite des Hebels 130 vorgesehen sein. Dies ist typischerweise insbesondere für die Blinkfunktionen der Fall, die durch eine Bewegung des Hebels angefordert werden. Ein derartiges Sensorelement ist mit dem Bezugszeichen 120-3 in Figur 1 dargestellt. Erfindungsgemäß ist diesem Sensorelement eine Kennzeichnungseinrichtung 112' zugeordnet, die die Aufgabe hat, die von diesem Sensorelement 120-3 angeforderten Funktionen in eine Kennung umzuwandeln. Auch diese Kennzeichnungseinrichtung 112' ist an die erfindungsgemäße Übertragungseinrichtung 150 angeschlossen, um die Kennungen an die elektronische Schaltung 140 zu übertragen. Allerdings sind für die bei dem lenksäulenseitigen Ende des Hebels 130 angeordneten Sensorelementen zusätzliche elektrische Leitungen 150' für eine Verbindung zu der elektronischen Schaltung 140 erforderlich. Diese zusätzlichen Leitungen 150' werden nicht durch den Hebel 130 geführt.

Grundsätzlich kann es unabhängig von der Wahl des Übertragungsverfahrens sinnvoll sein, die Sensorelemente als Hall-Elemente auszubilden. Besonders vorteilhaft ist deren Verwendung jedoch im Zusammenhang mit dem Bussystem, weil es bereits Hall-Elemente mit integrierter Kennzeichnungseinheit für ein solches Bussystem als Mikrochip zu kaufen gibt, zum Beispiel von der Firma Mikronas mit der Typenbezeichnung HAL8XXX.

Schließlich ist es vorteilhaft, wenn die elektronische Schaltung einen Mikrocontroller 145 aufweist zum Auslösen der empfangenen angeforderten Funktionen durch Aktivieren der entsprechenden Vorrichtungen, also zum Beispiel der akustischen Hupe, der Lichthupe, des Blinkers etc. Möglicherweise kann auch die Erkennungseinrichtung 142 mit Hilfe des Mikrocontrollers 145 realisiert sein.

Für den Betrieb des Mikrocontrollers ist ein Computerprogramm mit Programmcode erforderlich, der dazu geeignet ist, die zu den empfangenen Kennungen gehörenden angeforderten Funktionen zu erkennen, sofern diese Erkennung nicht von der separaten Erkennungseinrichtung 142 durchgeführt wird, und die Auslösung der angeforderten Funktionen zu veranlassen. Das Computerprogramm kann gegebenenfalls zusammen mit weiteren Computerprogrammen auf einem computerlesbaren Datenträger abgespeichert sein. Dabei kann es sich um eine Diskette, eine Compact-Disk (sogenannte CD), einen Flash-Memory oder dergleichen handeln. Die auf dem Datenträger abgespeicherte Software kann dann als Produkt an einen Kunden verkauft werden. Auch ist es möglich, dass das Computerprogramm gegebenenfalls zusammen mit weiteren Computerprogrammen zur Steuerung und/oder Regelung des Lenkstockschalters - ohne die Zuhilfenahme eines elektronischen Speichermediums - über ein elektronisches Kommunikationsnetzwerk als Produkt an einen Kunden übertragen und auf diese Weise verkauft wird. Bei dem Kommunikationsnetzwerk kann es sich insbesondere um das Internet handeln.

## Patentansprüche

1. Lenkstockschalter (100) für ein Fahrzeug, insbesondere Kraftfahrzeug, umfassend
einen Griff (110) mit einer Mehrzahl von Sensorelementen (120) zum individuellen Anfordern von vorbestimmten Funktionen, vorzugsweise durch den Fahrer des Fahrzeugs, wobei der Griff (110) über einen Hebel (130) mit der Lenksäule (200) des Fahrzeugs verbunden ist;
eine Übertragungseinrichtung (150) zum Übertragen der mit Hilfe der Sensorelemente (120-1 ... 120-3) angeforderten Funktionen; und eine elektronische Schaltung (140) zum Empfangen und Auslösen der angeforderten Funktionen;
**dadurch gekennzeichnet, dass**
eine Kennzeichnungseinrichtung (112, 112') vorgesehen ist zum Kennzeichnen der den einzelnen Sensorelementen (120-1, 120-2, 120-3) zugeordneten Funktionen in Form einer jeweils individuellen Kennung;
die Übertragungseinrichtung (150) ausgebildet ist, die angeforderten Funktionen in Form ihrer individuellen Kennungen zu übertragen; und
die elektronische Schaltung (140) eine Erkennungseinrichtung (142) aufweist zum Erkennen der angeforderten Funktionen anhand der übertragenen und empfangenen Kennungen.

2. Lenkstockschalter (100) nach Anspruch 1 **dadurch gekennzeichnet, dass** die Übertragungseinrichtung (150) vorzugsweise zusammen mit der Kennzeichnungs- und Erkennungseinrichtung (112, 142) als Bussystem ausgebildet ist.

3. Lenkstockschalter (100) nach Anspruch 2, **dadurch gekennzeichnet, dass** die Sensorelemente (120-1, 120-2, 120-3) jeweils eine Adresse in dem Bussystem repräsentieren und diese Adresse als Kennung für die dem jeweiligen Sensorelement zugeordnete Funktion dient.

4. Lenkstockschalter (100) nach Anspruch 1, **dadurch gekennzeichnet, dass** die Kennzeichnungseinrichtung (112, 112') als Modulationseinrichtung zum Erzeugen eines Übertragungssignals durch Aufmodulieren eines Funktionssignals, welches die jeweils angeforderte Funktion und deren Kennung repräsentiert, auf ein Trägersignal und die Erkennungseinrichtung (142) als Demodulationseinrichtung zum Erkennen der angeforderten Funktion durch Demodulieren des Übertragungssignals ausgebildet ist.

5. Lenkstockschalter (100) nach einem der Ansprüche 3 oder 4, **dadurch gekennzeichnet, dass** der Hebel (130) rohrförmig ausgebildet und in seinem Innern zumindest ein Teil der Übertragungseinrichtung (150) in Form einer nur 2-adrigen Leitung geführt ist zum Übertragen der über den Griff (110) angeforderten Funktionen in Form ihrer jeweiligen Kennungen.

6. Lenkstockschalter (100) nach einem der vorangegangenen Ansprüche, **dadurch gekennzeichnet, dass** der Lenkstockschalter (100) außerhalb des Griffes (110) oder des Hebels (130) mindestens ein weiteres Sensorelement (120-3) aufweist, wobei die Kennung der diesem Sensorelement (120-3) zugeordneten Funktion ebenfalls über die Übertragungseinrichtung (150) an die elektronische Schaltung (140) übertragen wird.

7. Lenkstockschalter (100) nach einem der vorangegangenen Ansprüche, **dadurch gekennzeichnet, dass** die Sensorelemente (120-1, 120-2, 120-3) zumindest teilweise als Hall-Elemente ausgebildet sind.

8. Lenkstockschalter (100) nach Anspruch 2 und 7, **dadurch gekennzeichnet, dass** die Kennzeichnungseinrichtung (112) des Bussystems zusammen mit mindestens einem Hallelement auf einem Halbleiter-Chip integriert ist.

9. Lenkstockschalter (100) nach einem der vorangegangenen Ansprüche, **dadurch gekennzeichnet, dass** die elektrische Schaltung (140) einen Mikrocontroller (145) aufweist zum Auswerten der empfangenen Kennungen und/oder Auslösen der durch die Kennungen repräsentierten angeforderten Funktionen.

10. Verfahren zum Betreiben eines Lenkstockschalters (100) für ein Fahrzeug, insbesondere Kraftfahrzeug, umfassend die Schritte:
Anfordern einer Mehrzahl von vorbestimmten Funktionen mit Hilfe von Sensorelementen (120-1, 120-2, 120-3) des Lenkstockschalters (100);
Übertragen der angeforderten Funktionen an eine elektronische Schaltung (140); und
Erfassen und Auslösen der angeforderten Funktion durch die elektronische Schaltung (140);
**dadurch gekennzeichnet, dass**
den vorbestimmten Funktionen eine individuelle Kennung zugeordnet wird, über die sie identifizierbar sind;
die Übertragung der angeforderten Funktionen in Form einer Übertragung ihrer jeweiligen Kennung erfolgt; und
die angeforderten Funktionen aufgrund der übertragenen Kennung erkannt und auslöst werden.

11. Computerprogramm für einen Mikrocontroller (145) eines Lenkstockschalters, mit Programmcode, der dazu geeignet ist, die zu den empfangenen Kennungen gehörenden angeforderten Funktionen zu erkennen und/oder deren Auslösung zu veranlassen.

12. Computerprogramm nach Anspruch 11, **dadurch gekennzeichnet, dass** der Programmcode auf einem computerlesbaren Datenträger gespeichert ist.
